# EUROPEAN PATENT SPECIFICATION

(11) **EP 3 263 375 B1**
(45) Date of publication and mention of the grant of the patent: **16.06.2021**
(21) Application number: 16754913.8
(22) Date of filing: 05.02.2016
(51) Int. Cl.: B60H 1/32, B60H 1/00, F25B 39/04, F25B 40/02

(54) **VEHICLE AIR-CONDITIONING APPARATUS**
FAHRZEUGKLIMAANLAGE
APPAREIL DE CLIMATISATION DE VÉHICULE

(30) Priority: 27.02.2015 JP 2015038650; 15.01.2016 JP 2016006141
(43) Date of publication of application: 03.01.2018
(73) Proprietor: Denso Corporation, Kariya-shi, Aichi-ken 448-8661 (JP)
(72) Inventor: ARAKI, Fuyuto, Kariya-city Aichi 448-8661 (JP); SHIRAI, Kouichirou, Kariya-city Aichi 448-8661 (JP)
(74) Representative: TBK
(86) International application number: PCT/JP2016/000607
(87) International publication number: WO 2016/136157

(56) References cited:
- EP-A2- 0 739 768
- DE-A1- 4 205 681
- DE-A1- 19 505 403
- JP-A- H09 216 512
- JP-A- S62 244 711
- JP-B2- 4 110 906
- JP-U- S62 411

## Description

### CROSS REFERENCE TO RELATED APPLICATION

This application is based on Japanese Patent Application No. 2015-038650 filed on February 27, 2015 and Japanese Patent Application No. 2016-006141 filed on January 15, 2016.

### TECHNICAL FIELD

The present invention relates to a vehicle air-conditioning apparatus that has a heat radiating heat exchanger located in a roof of a vehicle and an evaporator.

### BACKGROUND ART

Conventionally, as this type of vehicle air-conditioning apparatus, there is an air conditioner described in Patent Literature 1, for example. The vehicle air-conditioning apparatus described in Patent Literature 1 has a cooling unit portion and a condensing unit portion located on a flat roof of a bus vehicle. A vehicle air-conditioning apparatus which is mounted to a bus vehicle, as is the case with the vehicle air-conditioning apparatus in Patent Literature 1, requires a large heat exchanger suitable for the use. Therefore, the condensing unit portion in the vehicle air-conditioning apparatus in Patent Literature 1 has condensers instead of a single condenser. The condensers (i.e., heat radiating heat exchangers) are arranged in a width direction of the vehicle.

The cooling unit portion has an evaporator and is located behind the condensing unit portion in a front-rear direction of the vehicle to be adjacent to the condensing unit portion. In other words, the evaporator is located behind all of the condensers.

### PRIOR ART LITERATURES

Patent Literature 1: JP 4 110 906 B
A further prior art according to EP 0 739 768 A2 relates to an air-conditioning device for vehicles, in which heat exchangers and a condenser unit are arranged on the roof of the vehicle, wherein the condenser unit is provided with a first condenser and a second condenser. The air inlet openings for the heat exchanger and the air inlet openings for the condenser are arranged next to each other and are connected in a parallel manner to each other.

### SUMMARY OF INVENTION

According to studies by inventors of the present disclosure, the vehicle air-conditioning apparatus in Patent Literature 1 has the condensers, i.e., the heat radiating heat exchangers, which is advantageous in securing a large heat exchange amount. As compared with use of a single heat radiating heat exchanger to secure a large heat exchange amount required for a bus vehicle or the like, use of the heat radiating heat exchangers is expected to be advantageous in using a heat radiating heat exchanger of an vehicle air-conditioning apparatus, which is attached to a different type of vehicle from the bus vehicle or the like, for the bus vehicle or the like.

In addition to the aspect of securing of the large heat exchange amount, there is an aspect of effective utilization of a space on a roof of a bus vehicle. From this aspect, downsizing of a vehicle air-conditioning apparatus in a longitudinal direction of the vehicle (i.e., a front-rear direction of the vehicle) is desired. In order to satisfy such a desire, there is a vehicle air-conditioning apparatus having a different structure from that of the vehicle air-conditioning apparatus in Patent Literature 1.

For example, in the vehicle air-conditioning apparatus having the different structure, a heat radiating heat exchanger, which is an exterior heat exchanger, is located at a center of the vehicle air-conditioning apparatus in a width direction of the vehicle. In other words, the heat radiating heat exchanger is located between two evaporators, which are interior heat exchangers, in the width direction.

As the vehicle air-conditioning apparatus is made more space-saving, a space which can be used to secure a volume of air passing through the heat radiating heat exchanger is reduced. Therefore, the heat radiating heat exchanger is located between the two evaporators in the width direction, which is disadvantageous in enhancing cooling performance of the vehicle air-conditioning apparatus.

The present disclosure addresses the above-described issues, and it is an objective of the present disclosure to provide a vehicle air-conditioning apparatus that can improve a cooling performance.

This problem is solved by means of a vehicle air-conditioning apparatus with the features of claim 1. Preferred forms of realization of the subject-matter of the present invention are defined in the dependent claims. The vehicle air-conditioning apparatus according to claim 1has a condenser unit, a first evaporator unit, and a second evaporator unit. The condenser unit is attachable to a roof of a vehicle. The first evaporator unit is attachable to the roof. The second evaporator unit is attachable to the roof and arranged adjacent to the first evaporator unit in a width direction of the vehicle. The condenser unit has a condensing portion and at least one subcooling portion. The condensing portion condenses a refrigerant, compressed by a compressor, by exchanging heat between the refrigerant and outside air. The at least one subcooling portion cools a liquid-phase refrigerant, condensed by the condensing portion, by exchanging heat between the liquid-phase refrigerant and the outside air. The condenser unit is located between the first evaporator unit and the second evaporator unit in the width direction. Each of the first evaporator unit and the second evaporator unit evaporates a decompressed refrigerant, flowing out of the at least one subcooling portion and being decompressed, by exchanging heat between the decompressed refrigerant and air to be blown into a vehicle compartment. One subcooling portion of the at least one subcooling portion is located at a position displaced forward in a traveling direction of the vehicle in the condenser unit.

With this structure, because the vehicle air-conditioning apparatus receives ram pressure during traveling of the vehicle, it is possible to make a volume of air passing through the one subcooling portion located at the position displaced forward in the traveling direction (i.e., forward in a front-rear direction of the vehicle) in the condenser unit larger than a volume of air on a rear side. By utilizing this structure, it is possible to secure the larger volume of air introduced into the one subcooling portion in the condenser unit.

Therefore, cooling of the refrigerant in the one subcooling portion is facilitated. As compared with a structure in which a subcooling portion included in a condenser unit is located at a position displaced rearward, for example, it is possible to enhance cooling performance of the vehicle air-conditioning apparatus.

The second heat radiating heat exchanger is located on a front side of the first heat radiating heat exchanger in a traveling direction of the vehicle.

With this structure, because the vehicle air-conditioning apparatus receives the ram pressure during the traveling of the vehicle, it is possible to make a volume of air passing through the second heat radiating heat exchanger located on a front side of the first heat radiating heat exchanger in the traveling direction (i.e., in front, in the front-rear direction of the vehicle) larger than a volume of air on a rear side. By utilizing this structure, it is possible to secure the larger volume of air introduced into the subcooling portion of the second heat radiating heat exchanger than that into the first heat radiating heat exchanger located on a rear side.

Therefore, cooling of the refrigerant in the subcooling portion is facilitated. As compared with a structure in which a subcooling portion is located at a position displaced rearward in a space occupied by first and second heat radiating heat exchangers, for example, it is possible to enhance cooling performance of the vehicle air-conditioning apparatus.

### BRIEF DESCRIPTION OF DRAWINGS

The above and other objects, features and advantages of the present disclosure will become more apparent from the following detailed description made with reference to the accompanying drawings.
FIG. 1 is a perspective view illustrating a vehicle to which a vehicle air-conditioning apparatus is mounted, according to a first embodiment.
FIG. 2 is a diagram illustrating a schematic configuration of a refrigeration cycle device of the vehicle air-conditioning apparatus mounted in the vehicle shown in FIG. 1.
FIG. 3 is a view illustrating a configuration of a first heat radiating heat exchanger in the first embodiment.
FIG. 4 is a diagram illustrating a layout in a roof-mounted unit when viewed in a direction of an arrow IV in FIG. 1, i.e., from above the vehicle according to the first embodiment.
FIG. 5 is a refrigerant circuit diagram illustrating a part of a refrigerant circuit of a refrigeration cycle device according to a second embodiment from a compressor to an upstream side of a dryer.
FIG. 6 is a diagram illustrating a schematic configuration of a refrigeration cycle device according to a third embodiment and is a drawing corresponding to FIG. 2 of the first embodiment.
FIG. 7 is a view illustrating a configuration of a first heat radiating heat exchanger according to a fourth embodiment and is a drawing corresponding to FIG. 3 of the first embodiment.

### DESCRIPTION OF EMBODIMENTS

Embodiments of the present disclosure will be described hereinafter referring to drawings. In the embodiments, a part that corresponds to or equivalents to a part described in a preceding embodiment may be assigned with the same reference number, and a redundant description of the part may be omitted. When only a part of a configuration is described in an embodiment, another preceding embodiment may be applied to the other parts of the configuration. The parts may be combined even if it is not explicitly described that the parts can be combined. The embodiments may be partially combined within the scope of the appended claims.

### (First Embodiment)

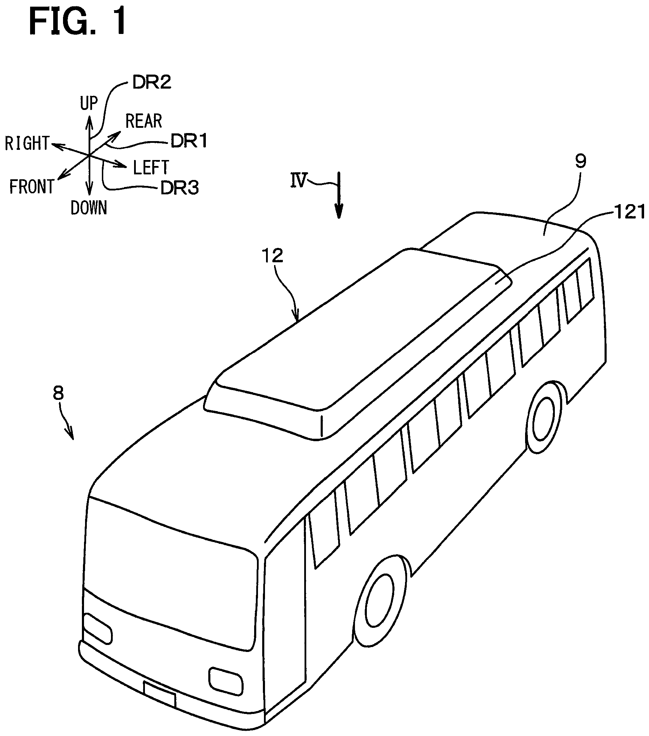

The first embodiment will be described with reference to FIGS. 1 to 4.

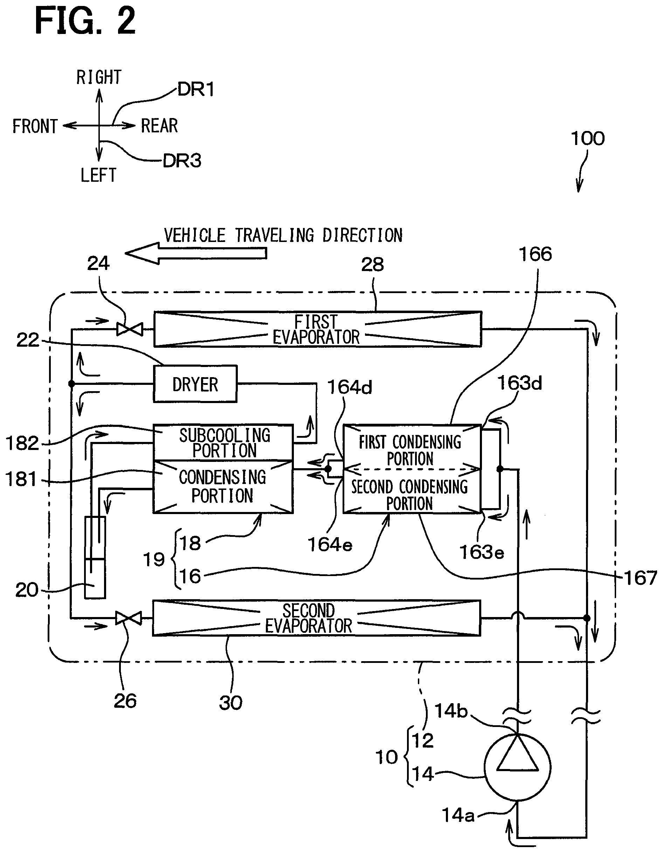

FIG. 1 is a perspective view showing a vehicle 8 to which a vehicle air-conditioning apparatus 100 (see FIG. 2) is mounted in the first embodiment. The vehicle air-conditioning apparatus 100 is mounted to the vehicle 8 having a box-shape, e.g., a bus vehicle as shown in FIG. 1. Arrows DR1, DR2, and DR3 in FIG. 1 show directions of the vehicle 8. In other words, a bidirectional arrow DR1 in FIG. 1 shows the front-rear direction DR1 of the vehicle, a bidirectional arrow DR2 shows the up-down direction DR2 of the vehicle, and a bidirectional arrow DR3 shows the width direction DR3 of the vehicle (the left-right direction DR3 of the vehicle) in FIG. 1.

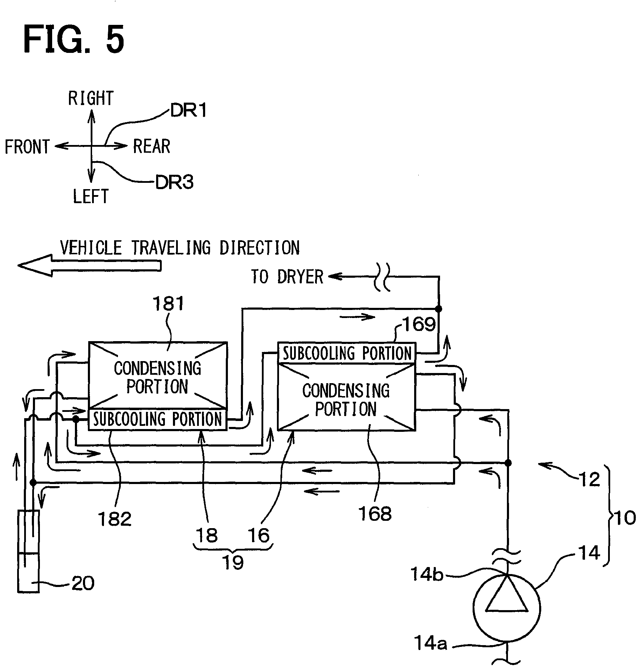

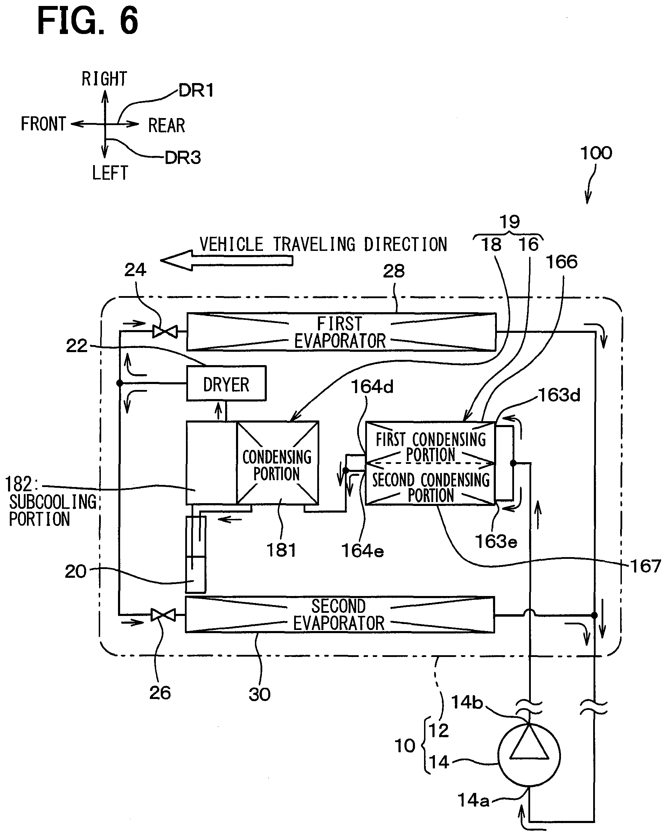

FIG. 2 is a diagram showing a general structure of a refrigeration cycle device 10 provided to the vehicle air-conditioning apparatus 100 mounted to the vehicle 8 in FIG. 1. Arrows drawn along refrigerant circulating paths in FIG. 2 show directions of refrigerant flows and the same holds true for FIGS. 5 and 6 described later. The vehicle air-conditioning apparatus 100 performs air conditioning of a vehicle compartment and the refrigeration cycle device 10 of the vehicle air-conditioning apparatus 100 configures a refrigeration cycle in which refrigerant circulates to repeat heat absorption and heat radiation, and cools air to be blown out into the vehicle compartment with the refrigerant. The vehicle air-conditioning apparatus 100 has a heater core using cooling water of an engine for traveling as a heat source, a blower, and a blowing duct, which are not shown, for example, in addition to the refrigeration cycle device 10.

Specifically, as shown in FIG. 2, the refrigeration cycle device 10 has a roof-mounted unit 12 mounted to a roof 9 (see FIG. 1) of the vehicle 8 and a compressor 14 located below a floor of a rear portion of the vehicle 8, for example. The roof-mounted unit 12 has a first heat radiating heat exchanger 16, a second heat radiating heat exchanger 18, a receiver 20, a dryer 22, a first pressure reducing device 24, a second pressure reducing device 26, a first evaporator 28, a second evaporator 30, and the like. Respective arrows showing the front-rear direction DR1 and the width direction DR3 in FIG. 2 show relative positional relationships between the heat radiating heat exchangers 16 and 18 and the evaporators 28 and 30 and the same holds true for FIGS. 5 and 6 described later.

In a refrigerant circuit of the refrigeration cycle device 10 shown in FIG. 2, the refrigerant discharged from the compressor 14 flows through the compressor 14, the first heat radiating heat exchanger 16, a condensing portion 181 of the second heat radiating heat exchanger 18, the receiver 20, a subcooling portion 182 of the second heat radiating heat exchanger 18, and the dryer 22 in this order and is divided into two refrigerant paths on a downstream side of the dryer 22. The refrigerant flowing out of the dryer 22 flows through the first pressure reducing device 24, the first evaporator 28, and the compressor 14 in this order in one of the two refrigerant paths. On the other hand, the refrigerant flowing out of the dryer 22 flows through the second pressure reducing device 26, the second evaporator 30, and the compressor 14 in this order in the other one of the two refrigerant paths.

The compressor 14 has a refrigerant suction port 14a and a refrigerant discharge port 14b, compresses the refrigerant drawn from the refrigerant suction port 14a, and discharges the compressed refrigerant from the refrigerant discharge port 14b. For example, the compressor 14 is driven by the engine for traveling (not shown) via an electromagnetic clutch.

The first heat radiating heat exchanger 16 is a condenser that condenses the refrigerant compressed by the compressor 14 by exchanging heat between the refrigerant and outside air. The outside air used for exchanging heat with the refrigerant is air outside the vehicle compartment and, specifically, air including traveling wind blowing from a front side in the front-rear direction DR1. In other words, the first heat radiating heat exchanger 16 is an exterior heat exchanger that exchanges heat between the air outside the vehicle compartment and the refrigerant.

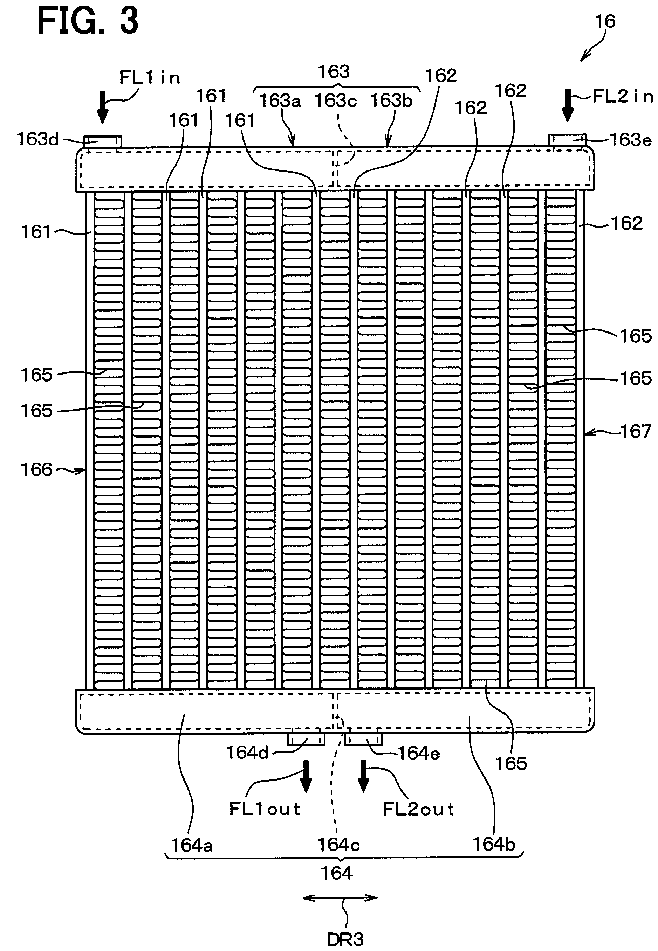

The first heat radiating heat exchanger 16 is a multi-flow heat exchanger and configured as shown in FIG. 3. FIG. 3 is a view showing a structure of the first heat radiating heat exchanger 16 only. As shown in FIG. 3, the first heat radiating heat exchanger 16 has first refrigerant tubes 161, second refrigerant tubes 162, an inlet-side header tank 163 having a first inlet-side tank portion 163a and a second inlet-side tank portion 163b, an outlet-side header tank 164 having a first outlet-side tank portion 164a and a second outlet-side tank portion 164b, and corrugated fins 165.

The first refrigerant tube 161 and the second refrigerant tube 162 of the first heat radiating heat exchanger 16 have similar structures having flat shapes except where to be connected and the refrigerant flows through the refrigerant tubes 161 and 162.

The first refrigerant tubes 161 are stacked in one direction, i.e., a tube stacking direction, at intervals to define a void between each adjacent two tubes of the first refrigerant tubes 161. The refrigerant flows in the first refrigerant tubes 161 while exchanging heat with the outside air flowing in the void. Similarly, the second refrigerant tubes 162 are also stacked in the tube stacking direction at intervals to define a void between adjacent two tubes of the second refrigerant tubes 162. The refrigerant flows while exchanging heat with the outside air flowing in the void. The first heat radiating heat exchanger 16 is located in the roof 9 (see FIG. 1) of the vehicle 8 so that all of the first refrigerant tubes 161 are arranged on one side in the width direction DR3 with respect to all of the second refrigerant tubes 162. Although the tube stacking direction is the same as the width direction DR3 in the present embodiment, the tube stacking direction may not be the same as the width direction DR3. The same holds true for the fourth embodiment described later.

The inlet-side header tank 163 has a separator 163c as a partition plate that divides an internal space of the inlet-side header tank 163 into two. The first inlet-side tank portion 163a is one of the tank portions separated by the separator 163c and the second inlet-side tank portion 163b is the other tank portion separated by the separator 163c.

The outlet-side header tank 164 is also divided similarly to the inlet-side header tank 163. In other words, the outlet-side header tank 164 has a separator 164c that divides an internal space of the outlet-side header tank 164 into two. The first outlet-side tank portion 164a is one of the tank portions separated by the separator 164c. The second outlet-side tank portion 164b is the other tank portion separated by the separator 164c.

The first inlet-side tank portion 163a is connected to one ends of the first refrigerant tubes 161 and the first outlet-side tank portion 164a is connected to the other ends of the first refrigerant tubes 161. The second inlet-side tank portion 163b is connected to one ends of the second refrigerant tubes 162 and the second outlet-side tank portion 164b is connected to the other ends of the second refrigerant tubes 162.

The second inlet-side tank portion 163a is provided with a first refrigerant inlet 163d. The second inlet-side tank portion 163b is provided with a second refrigerant inlet 163e. The first outlet-side tank portion 164a is provided with a first refrigerant outlet 164d that guides the refrigerant to flow out of the first outlet-side tank portion 164a. The second outlet-side tank portion 164b is provided with a second refrigerant outlet 164e that guides the refrigerant to flow out of the second outlet-side tank portion 164b.

As shown in FIG. 2, the first refrigerant inlet 163d and the second refrigerant inlet 163e are arranged in parallel to each other in a flow direction of refrigerant flowing in the first heat radiating heat exchanger 16. That is, the refrigerant compressed by the compressor 14 (see FIG. 2) flows into the first inlet-side tank portion 163a from the first refrigerant inlet 163d as shown by an arrow FL1 in as shown in FIG. 3. The first inlet-side tank portion 163a distributes the refrigerant, flowing into the first inlet-side tank portion 163a, to the first refrigerant tubes 161. Similarly, the refrigerant compressed by the compressor 14 (see FIG. 2) flows into the second inlet-side tank portion 163b from the second refrigerant inlet 163e as shown by an arrow FL2in shown in FIG. 3. The second inlet-side tank portion 163b distributes the refrigerant, flowing into the second inlet-side tank portion 163b, to the second refrigerant tubes 162.

As shown in FIG. 2, the first refrigerant outlet 164d and the second refrigerant outlet 164e are arranged in parallel to each other in the flow direction of the refrigerant flowing in the first heat radiating heat exchanger 16. That is, the first outlet-side tank portion 164a collects the refrigerant flowing from the first refrigerant tubes 161. The first outlet-side tank portion 164a subsequently guides the refrigerant to flow out of the first refrigerant outlet 164d toward the subcooling portion 182 of the second heat radiating heat exchanger 18 via the condensing portion 181 (see FIG. 2) of the second heat radiating heat exchanger 18 and the receiver 20 as shown by an arrow FL1out in FIG. 3. Similarly, the second outlet-side tank portion 164b collects the refrigerant flowing from the second refrigerant tubes 162. The second outlet-side tank portion 164b subsequently guides the refrigerant to flow out of the second refrigerant outlet 164e toward the subcooling portion 182 of the second heat radiating heat exchanger 18 via the condensing portion 181 of the second heat radiating heat exchanger 18 and the receiver 20 as shown by an arrow FL2out in FIG. 3.

As shown in FIG. 3, the first refrigerant inlet 163d is provided at a position displaced to one side of the first inlet-side tank portion 163a in the tube stacking direction, and the first refrigerant outlet 164d is provided at a position displaced to the other side opposite to the one side of the first outlet-side tank portion 164a in the tube stacking direction. Similarly, the second refrigerant inlet 163e is provided at a position displaced to one side of the second inlet-side tank portion 163b in the tube stacking direction and the second refrigerant outlet 164e is provided at a position displaced to the other side opposite to the one side of the second outlet-side tank portion 164b in the tube stacking direction.

To describe the arrangements of the refrigerant inlets 163d, 163e and the refrigerant outlets 164d, 164e by using a first condensing portion 166 and a second condensing portion 167 (described later), the first refrigerant inlet 163d and the first refrigerant outlet 164d are located in diagonal positions of the first condensing portion 166 having a rectangular shape when seen in a passing direction of the outside air as shown in FIG. 3. The second refrigerant inlet 163e and the second refrigerant outlet 164e are located in diagonal positions of the second condensing portion 167 having a rectangular shape when seen in the passing direction of the outside air.

The corrugated fins 165 are obtained by forming thin-walled band plates into corrugated shapes. The corrugated fins 165 are located between the refrigerant tubes 161, 162 and joined to adjacent refrigerant tubes 161, 162 by brazing or the like. In this way, the corrugated fins 165 facilitate heat exchange between the refrigerant flowing through the refrigerant tubes 161, 162 and the outside air.

The first heat radiating heat exchanger 16 has the two condensing portions 166 and 167 that condense the refrigerant compressed by the compressor 14 (see FIG. 2), i.e., the first condensing portion 166 and the second condensing portion 167. The first condensing portion 166 and the second condensing portion 167 are arranged in parallel to each other in the flow direction of the refrigerant flowing in the first heat radiating heat exchanger 16 and arranged in the width direction DR3.

Specifically, in the first heat radiating heat exchanger 16, the first refrigerant tubes 161, the first inlet-side tank portion 163a, and the first outlet-side tank portion 164a configure the first condensing portion 166. The second refrigerant tubes 162, the second inlet-side tank portion 163b, and the second outlet-side tank portion 164b configure the second condensing portion 167.

The first condensing portion 166 and the second condensing portion 167 are heat exchanging portions having about the same size. Specifically, a quantity of the first refrigerant tubes 161 included in the first condensing portion 166 is the same as a quantity of the second refrigerant tubes 162 included in the second condensing portion 167. In other words, a total flow path sectional area of the first refrigerant tubes 161 included in the first condensing portion 166 is the same as a total flow path sectional area of the second refrigerant tubes 162 included in the second condensing portion 167. Therefore, a flow rate of the refrigerant flowing from the compressor 14 (see FIG. 1) into the first condensing portion 166 is about the same as a flow rate of the refrigerant flowing from the compressor 14 into the second condensing portion 167.

Referring back to FIG. 2, the second heat radiating heat exchanger 18 is similar to the above-described first heat radiating heat exchanger 16 in radiating heat of the refrigerant compressed by the compressor 14 to the outside air. In other words, the second heat radiating heat exchanger 18 is an exterior heat exchanger that exchange heat between air outside the vehicle compartment and the refrigerant. However, the second heat radiating heat exchanger 18 is located downstream of the first heat radiating heat exchanger 16 in the flow direction of the refrigerant flowing in the first heat radiating heat exchanger 16. The second heat radiating heat exchanger 18 is a multi-flow heat exchanger, for example. The second heat radiating heat exchanger 18 has a similar structure to the first heat radiating heat exchanger 16, i.e., a structure in which an internal space of each of header tanks is divided by a separator to thereby have two heat exchanging portions independent of each other in the flow direction of the refrigerant flowing in the first heat radiating heat exchanger 16. Specifically, the second heat radiating heat exchanger 18 has the condensing portion 181 and the subcooling portion 182 as the two heat exchanging portions.

The condensing portion 181 of the second heat radiating heat exchanger 18 is connected in series with the first heat radiating heat exchanger 16 and located downstream of the first heat radiating heat exchanger 16 in a flow direction of refrigerant flowing from the compressor 14 to the first evaporator 28 or the second evaporator 30. Therefore, the refrigerant compressed by the compressor 14 flows into the condensing portion 181 after passing through the first heat radiating heat exchanger 16. The condensing portion 181 condenses the refrigerant flowing into the condensing portion 181 by exchanging heat between the refrigerant and the outside air. The condensing portion 181 guides the refrigerant after the heat exchange to flow to the receiver 20. Since the first heat radiating heat exchanger 16 does not have a heat exchanging portion corresponding to the subcooling portion 182 of the second heat radiating heat exchanger 18 as obvious from FIG. 2, an entirety of the refrigerant flowing out of the first heat radiating heat exchanger 16 flows into the condensing portion 181 of the second heat radiating heat exchanger 18.

The receiver 20 is a gas-liquid separator that separates the refrigerant, flowing from the condensing portion 181 of the second heat radiating heat exchanger 18, into gas and liquid and guides separated liquid-phase refrigerant to flow to the subcooling portion 182 of the second heat radiating heat exchanger 18. The receiver 20 stores a predetermined amount of refrigerant in the receiver to thereby adjust an amount of refrigerant circulating through the refrigeration cycle.

The liquid-phase refrigerant condensed by the first heat radiating heat exchanger 16 and the condensing portion 181 of the second heat radiating heat exchanger 18, i.e., the liquid-phase refrigerant from the receiver 20, flows into the subcooling portion 182 of the second heat radiating heat exchanger 18. The subcooling portion 182 cools the liquid-phase refrigerant, flowing into the subcooling portion 182, by exchanging heat between the liquid-phase refrigerant and the outside air. The subcooling portion 182 guides the cooled liquid-phase refrigerant to flow to the dryer 22.

Since a volumetric flow rate of the refrigerant flowing into the subcooling portion 182 is smaller than a volumetric flow rate of the refrigerant flowing into the condensing portion 181 due to condensation of the refrigerant, the subcooling portion 182 is a smaller heat exchanging portion than the condensing portion 181 as shown in FIG. 2. For example, a quantity of refrigerant tubes included in the subcooling portion 182 is smaller than a quantity of refrigerant tubes included in the condensing portion 181. In other words, a total flow rate sectional area of the refrigerant tubes included in the subcooling portion 182 is smaller than a total flow rate sectional area of the refrigerant tubes included in the condensing portion 181.

The above-described first heat radiating heat exchanger 16 and second heat radiating heat exchanger 18 configure a condenser unit 19 having the condensing portions 166, 167, and 181 and the one subcooling portion 182.

Both of the above-described first heat radiating heat exchanger 16 and the condensing portion 181 of the second heat radiating heat exchanger 18 are a heat exchanger that condenses the refrigerant. However, the first heat radiating heat exchanger 16 is different from the condensing portion 181 of the second heat radiating heat exchanger 18 in that the first heat radiating heat exchanger 16 is located upstream of the condensing portion 181 in the flow direction of the refrigerant flowing from the compressor 14 to the first evaporator 28 or the second evaporator 30. Therefore, each of the first heat radiating heat exchanger 16 and the condensing portion 181 of the second heat radiating heat exchanger 18 has a structure adapted to the change in volume due to the condensation of the refrigerant.

For example, if the refrigerant tubes 161 and 162 (see FIG. 3) included in the first heat radiating heat exchanger 16 are the same as the refrigerant tubes included in the condensing portion 181, a quantity of refrigerant tubes in the first heat radiating heat exchanger 16 is larger than a quantity of refrigerant tubes in the condensing portion 181. In other words, a total flow path sectional area of the refrigerant tubes 161 and 162 included in the first heat radiating heat exchanger 16 is larger than the total flow path sectional area of the refrigerant tubes included in the condensing portion 181. In this way, the first heat radiating heat exchanger 16 is a larger heat exchanging portion than the condensing portion 181 of the second heat radiating heat exchanger 18 as shown in FIG. 2. In other words, the first heat radiating heat exchanger 16 has a larger heat exchange capacity.

The dryer 22 has desiccating agent such as silica gel, absorbs incoming moisture which has entered the liquid-phase refrigerant flowing from the subcooling portion 182 of the second heat radiating heat exchanger 18, and guides the liquid-phase refrigerant to flow to the first pressure reducing device 24 and the second pressure reducing device 26.

Both of the first pressure reducing device 24 and the second pressure reducing device 26 are thermal expansion valves used for a general vehicle air-conditioning apparatus. The first pressure reducing device 24 decompresses the refrigerant flowing from the dryer 22 and guides the refrigerant to flow to the first evaporator 28. The second pressure reducing device 26 decompresses the refrigerant flowing from the dryer 22 and guides the refrigerant to flow to the second evaporator 30.

The refrigerant flowing out of the subcooling portion 182 of the second heat radiating heat exchanger 18 and being decompressed in the first pressure reducing device 24 flows into the first evaporator 28. Then, the first evaporator 28 evaporates the decompressed refrigerant by exchanging heat between the decompressed refrigerant and air to be blown into the vehicle compartment (i.e., blown air) and cools the air. In short, the first evaporator 28 is an interior heat exchanger that cools the air to be blow into the vehicle compartment.

The second evaporator 30 is also an interior heat exchanger that operates similarly to the above-described first evaporator 28. In other words, the refrigerant flowing out of the subcooling portion 182 of the second heat radiating heat exchanger 18 and being decompressed in the second pressure reducing device 26 flows into the second evaporator 30. Then, the second evaporator 30 evaporates the decompressed refrigerant by exchanging heat between the decompressed refrigerant and air to be blown into the vehicle compartment and cools the air.

The refrigerant flowing out of the first evaporator 28 after the heat exchange and the refrigerant flowing out of the second evaporator 30 after the heat exchange are drawn into the refrigerant suction port 14a of the compressor 14.

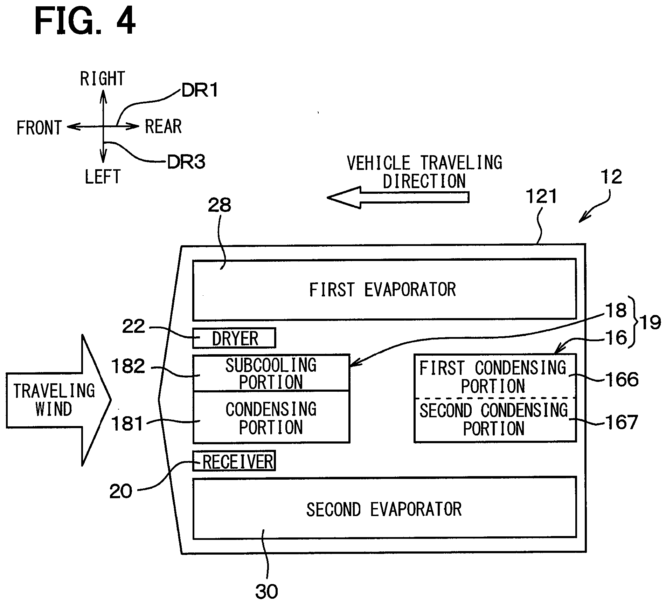

Next, a layout of each of the constitutional elements 16, 18, 20, 22, 28, and 30 forming the roof-mounted unit 12 will be described by using FIG. 4. FIG. 4 is a diagram showing the layout in the roof-mounted unit 12 seen in a direction of an arrow IV in FIG. 1, i.e., from above in the up-down direction DR2. In FIG. 4, the pressure reducing devices 24 and 26 are not shown and respective arrows showing the front-rear direction DR1 and the width direction DR3 show relative positional relationships between the constitutional elements forming the roof-mounted unit 12 and an orientation of the roof-mounted unit 12.

As shown in FIG. 4, the first heat radiating heat exchanger 16 and the second heat radiating heat exchanger 18 are arranged on a front side and a rear side along a traveling direction of the vehicle. Specifically, the second heat radiating heat exchanger 18 is located on a front side of the first heat radiating heat exchanger 16 in the traveling direction. In other words, looking at a layout of the subcooling portion 182 of the second heat radiating heat exchanger 18, the subcooling portion 182 is located at a position displaced forward in the traveling direction in the condenser unit 19.

The traveling direction of the vehicle refers to a forward direction in the front-rear direction DR1 as shown in FIG. 4. The roof-mounted unit 12 has a unit case 121 as an outer shell. The unit case 121 is formed so that the traveling wind, which is the outside air blowing from the front side, is introduced into the unit case 121 and the traveling wind flows from the front side into the second heat radiating heat exchanger 18 and the first heat radiating heat exchanger 16.

Therefore, in the roof-mounted unit 12 in FIG. 4, the first heat radiating heat exchanger 16 and the second heat radiating heat exchanger 18 are provided so that an air volume of the outside air (i.e., traveling wind) passing through the second heat radiating heat exchanger 18 is larger than an air volume of the outside air (i.e., traveling wind) passing through the first heat radiating heat exchanger 16.

The first evaporator 28 is located on one side (specifically, on the right side) of the first heat radiating heat exchanger 16 and the second heat radiating heat exchanger 18, which are arranged in the front-rear direction DR1, in the width direction DR3. In other words, the first evaporator 28 configures a first evaporator unit that is one of two evaporator units provided to the vehicle air-conditioning apparatus 100.

The second evaporator 30 is located on the other side (specifically, on the left side) of the first heat radiating heat exchanger 16 and the second heat radiating heat exchanger 18 in the width direction DR3. In other words, the second evaporator 30 configures the second evaporator unit that is the other of the two evaporator units. The second evaporator unit is arranged adjacent to the first evaporator unit in the width direction DR3.

As can be seen from the structure, the first heat radiating heat exchanger 16 and the second heat radiating heat exchanger 18 are arranged in the front-rear direction DR1 between the two evaporators 28 and 30 arranged in the width direction DR3. In short, the condenser unit 19 configured by the first heat radiating heat exchanger 16 and the second heat radiating heat exchanger 18 is located between the first evaporator unit having the first evaporator 28 and the second evaporator unit having the second evaporator 30 in the width direction DR3.

For example, when seen from the first evaporator 28 or the second evaporator 30, the first heat radiating heat exchanger 16 and the second heat radiating heat exchanger 18 are located on one side of the first evaporator 28 or the second evaporator 30 in the width direction DR3. In other words, when seen in the up-down direction DR2, the first heat radiating heat exchanger 16 and the second heat radiating heat exchanger 18 are located so that distances between one of the first evaporator 28 and the second evaporator 30 and the first heat radiating heat exchanger 16 and the second heat radiating heat exchanger 18 are shorter than distances between the other of the first evaporator 28 and the second evaporator 30 and the first heat radiating heat exchanger 16 and the second heat radiating heat exchanger 18 in the width direction DR3.

Lengths of the first evaporator 28 and the second evaporator 30 are longer than both of a length of the first heat radiating heat exchanger 16 and a length of the second heat radiating heat exchanger 18 in the front-rear direction DR1. Both of the first heat radiating heat exchanger 16 and the second heat radiating heat exchanger 18 are within an area occupied by the first evaporator 28 and the second evaporator 30 in the front-rear direction DR1. The receiver 20 and the dryer 22 are also within the area occupied by the first evaporator 28 and the second evaporator 30 in the front-rear direction DR1.

The second heat radiating heat exchanger 18 is located so that the condensing portion 181 is arranged adjacent to the subcooling portion 182 in the width direction DR3. Specifically, in the second heat radiating heat exchanger 18, the condensing portion 181 is located on a side close to the second evaporator 30 and the subcooling portion 182 is located on a side close to the first evaporator 28. The receiver 20 is located between the second heat radiating heat exchanger 18 and the second evaporator 30 in the width direction DR3 and the dryer 22 is located between the second heat radiating heat exchanger 18 and the first evaporator 28 in the width direction DR3.

As described above, according to the present embodiment, as shown in FIG. 4, the first heat radiating heat exchanger 16 and the second heat radiating heat exchanger 18 are arranged on the front side and the rear side along the traveling direction and located at a position displaced to the one side in the width direction DR3 with respect to the first evaporator 28 and the second evaporator 30. In short, the first heat radiating heat exchanger 16 and the second heat radiating heat exchanger 18 are arranged in the front-rear direction DR1 between the two evaporators 28 and 30 arranged in the width direction DR3.

Therefore, as compared with the structure such as the vehicle air-conditioning apparatus in Patent Literature 1, for example, in which the evaporator and the heat radiating heat exchangers are arranged in the front-rear direction DR1, it is possible to shorten the length occupied by the first and second heat radiating heat exchangers 16 and 18 and the first and second evaporators 28 and 30 in the front-rear direction DR1. Specifically, it is possible to improve flexibility in layout of the roof-mounted unit 12 by keeping a dimension of the roof-mounted unit 12 in the width direction DR3 within a predetermined width dimension not exceeding a width of the roof 9 and shortening the length of the roof-mounted unit 12 in the front-rear direction DR1.

According to the present embodiment, the first heat radiating heat exchanger 16 has no heat exchanging portion corresponding to the subcooling portion 182 of the second heat radiating heat exchanger 18 and the entirety of the refrigerant flowing out of the first heat radiating heat exchanger 16 flows into the condensing portion 181 of the second heat radiating heat exchanger 18. Therefore, as shown in FIG. 2, it is possible to simplify the refrigerant circulating paths from the compressor 14 to the evaporators 28 and 30.

According to the present embodiment, as shown in FIG. 4, the second heat radiating heat exchanger 18 is located on the front side of the first heat radiating heat exchanger 16 in the front-rear direction DR1. The traveling wind flows from the front side to the second heat radiating heat exchanger 18 and the first heat radiating heat exchanger 16. Therefore, the air volume of the outside air passing through the second heat radiating heat exchanger 18 becomes larger than the air volume of the outside air passing through the first heat radiating heat exchanger 16. The outside air absorbs heat and increases in temperature as the outside air exchanges heat with the refrigerant in each of the heat radiating heat exchangers 16 and 18. The outside air before absorbing the heat in the first heat radiating heat exchanger 16 flows through the subcooling portion 182 of the second heat radiating heat exchanger 18.

Therefore, a larger volume of the outside air, which is sufficiently cool, can flow to the subcooling portion 182 as compare to a configuration in which the second heat radiating heat exchanger 18 is located behind the first heat radiating heat exchanger 16 in the front-rear direction DR1. In other words, it is possible to stably secure the large heat exchange capacity of the subcooling portion 182, which enhances cooling performance of the vehicle air-conditioning apparatus 100.

In other words, in the condenser unit 19, cooling of the refrigerant in the subcooling portion 182 is facilitated. As a result, as compared with a structure in which the subcooling portion 182 included in the condenser unit 19 is located at a position displace rearward in the front-rear direction DR1, for example, it is possible to enhance the cooling performance of the vehicle air-conditioning apparatus 100.

According to the present embodiment, as shown in FIG. 2, the first heat radiating heat exchanger 16 has the first condensing portion 166 and the second condensing portion 167 that condense the refrigerant discharged from the compressor 14. The first condensing portion 166 and the second condensing portion 167 are arranged in parallel to each other in the flow direction of the refrigerant flowing in the first heat radiating heat exchanger 16. Therefore, as compared with a structure in which a first heat radiating heat exchanger 16 is not divided into two condensing portions 166 and 167 but formed by a single condensing portion, there is an advantage that it is easy to bring distribution of the refrigerant close to even distribution by suppressing uneven distribution of the refrigerant in the first heat radiating heat exchanger 16 while increasing the first heat radiating heat exchanger 16 in size. In other words, it is possible to improve distributivity of the refrigerant in the first heat radiating heat exchanger 16, i.e., distributivity into each of the refrigerant tubes 161 and 162.

According to the present embodiment, as shown in FIG. 4, the first heat radiating heat exchanger 16 is located so that the first condensing portion 166 is arranged adjacent to the second condensing portion 167 in the width direction DR3. As a result, the traveling wind evenly flows from the front side into the first condensing portion 166 and the second condensing portion 167, which suppresses unevenness of the heat exchange capacities of the first condensing portion 166 and the second condensing portion 167.

### (Second Embodiment)

The second embodiment, not being part of the claimed invention, will be described with reference to FIG. 5.

FIG. 5 is a refrigerant circuit diagram showing a part of a refrigerant circuit of a refrigeration cycle device 10 in the present embodiment from a compressor 14 to an upstream side of a dryer 22. As shown in FIG. 5, a vehicle air-conditioning apparatus 100 in the present embodiment is different from that in the first embodiment (see FIG. 2) in refrigerant circulating paths from a refrigerant discharge port 14b of the compressor 14 to the dryer 22 and a first heat radiating heat exchanger 16. In the present embodiment, refrigerant circulating paths from the dryer 22 to a refrigerant suction port 14a of the compressor 14 are the same as those in FIG. 2 and therefore are not shown in FIG. 5.

Specifically, while the first heat radiating heat exchanger 16 in the first embodiment has the two condensing portions 166 and 167 as shown in FIG. 2, the first heat radiating heat exchanger 16 in the present embodiment has one condensing portion 168 and one subcooling portion 169 as shown in FIG. 5. The condensing portion 168 has the same function as the condensing portions 166 and 167 in the first embodiment. In other words, the condensing portion 168 of the first heat radiating heat exchanger 16 shown in FIG. 5 condenses refrigerant, which has been compressed by the compressor 14, by exchanging heat between the refrigerant and outside air.

The subcooling portion 169 of the first heat radiating heat exchanger 16 has the same function as the subcooling portion 182 of the second heat radiating heat exchanger 18. In other words, the subcooling portion 169 of the first heat radiating heat exchanger 16 cools liquid-phase refrigerant by exchanging heat between the liquid-phase refrigerant and the outside air. The liquid-phase refrigerant is a refrigerant after being condensed by the condensing portion 168 of the first heat radiating heat exchanger 16 and a condensing portion 181 of a second heat radiating heat exchanger 18.

In the refrigerant circuit in the refrigeration cycle device 10 shown in FIG. 5, the refrigerant discharged from the compressor 14 flows into the condensing portion 168 of the first heat radiating heat exchanger 16 and the condensing portion 181 of the second heat radiating heat exchanger 18, and flows into a receiver 20 after condensed by the condensing portions 168 and 181. Liquid-phase refrigerant from the receiver 20 flows into the subcooling portion 169 of the first heat radiating heat exchanger 16 and the subcooling portion 182 of the second heat radiating heat exchanger 18, and flows into the dryer 22 (see FIG. 2) after cooled in the subcooling portions 169 and 182.

As described above, in the flow direction of the refrigerant flowing from the compressor 14 to evaporators 28 and 30, the condensing portion 168 of the first heat radiating heat exchanger 16 and the condensing portion 181 of the second heat radiating heat exchanger 18 are connected in parallel to each other. The subcooling portion 169 of the first heat radiating heat exchanger 16 and the subcooling portion 182 of the second heat radiating heat exchanger 18 are also connected in parallel to each other. In short, the first heat radiating heat exchanger 16 and the second heat radiating heat exchanger 18 are connected in parallel to each other.

In the present embodiment, as described above, a condenser unit 19 has the subcooling portions 169 and 182. The subcooling portion 182 of the second heat radiating heat exchanger 18, which is one of the subcooling portions 169 and 182, is located at a position displaced forward in a traveling direction in the condenser unit 19.

In the present embodiment, similarly to the above-described first embodiment, it is possible to obtain effects exerted by the same structures as those in the first embodiment.

Here, effects of the first embodiment in comparison with the above-described second embodiment will be described. In the flow direction of the refrigerant flowing from the compressor 14 to the evaporators 28 and 30, the condensing portion 168 of the first heat radiating heat exchanger 16 is connected in parallel to the condensing portion 181 of the second heat radiating heat exchanger 18 in the second embodiment. On the other hand, in the first embodiment, both of the condensing portions 166 and 167 of the first heat radiating heat exchanger 16 are connected in series with the condensing portion 181 of the second heat radiating heat exchanger 18. With such a difference, as can be understood from contrast between FIGS. 2 and 5, a piping circuit in the roof-mounted unit 12 is simpler in the first embodiment than in the second embodiment, which improves flexibility in layout of the constitutional elements of the roof-mounted unit 12.

### (Third Embodiment)

The third embodiment will be described with reference to FIG. 6. In the present embodiment, points in which the present embodiment is different from the above-described first embodiment will be mainly described.

FIG. 6 is a diagram showing a general structure of a refrigeration cycle device 10 in the present embodiment and corresponding to FIG. 2 in the first embodiment. As shown in FIG. 6, a vehicle air-conditioning apparatus 100 in the present embodiment is different from that in the first embodiment (see FIG. 2) in an orientation of a second heat radiating heat exchanger 18. Specifically, the second heat radiating heat exchanger 18 is located so that a subcooling portion 182 is located on a front side of a condensing portion 181 in a traveling direction.

In this way, as compared with the first embodiment (see FIG. 2) in which the condensing portion 181 and the subcooling portion 182 are arranged in the width direction DR3, it is easy to make an air volume of outside air flowing into the subcooling portion 182 of the second heat radiating heat exchanger 18 larger. As a result, it is possible to enhance cooling performance of the vehicle air-conditioning apparatus 100.

In the present embodiment, similarly to the above-described first embodiment, it is possible to obtain effects exerted by the same structures as those in the first embodiment.

Although the present embodiment is a variation of the first embodiment, it is possible to combine the present embodiment with the above-described second embodiment.

### (Fourth Embodiment)

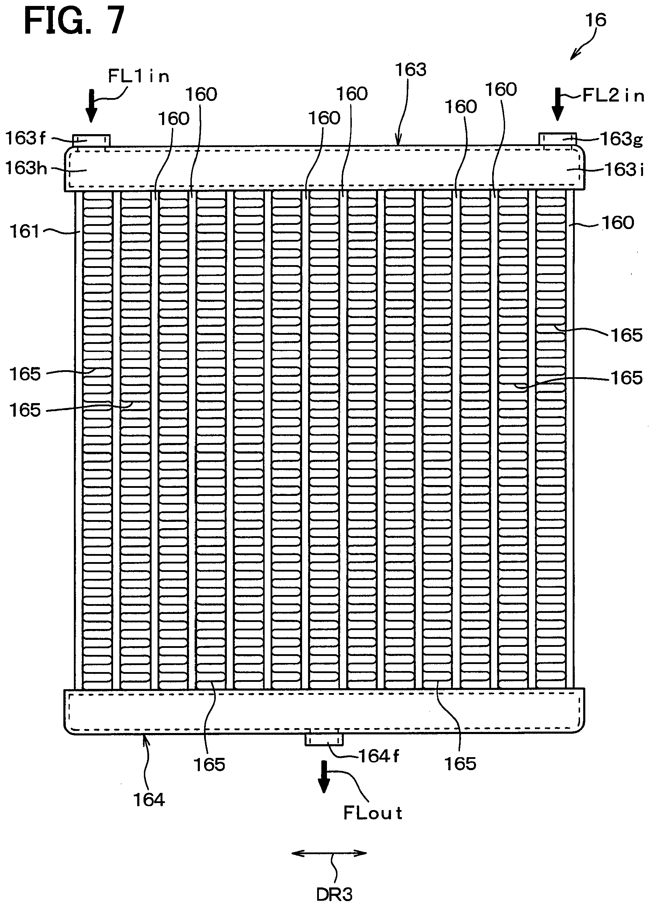

Next, the fourth embodiment will be described with reference to FIG. 7. In the present embodiment, points in which the present embodiment is different from the above-described first embodiment will be mainly described.

FIG. 7 is a view showing a structure of a first heat radiating heat exchanger 16 only in the present embodiment and corresponding to FIG. 3 in the first embodiment. As shown in FIG. 7, the present embodiment is different from the first embodiment (see FIG. 3) in the structure of the first heat radiating heat exchanger 16. Specifically, the first heat radiating heat exchanger 16 in the present embodiment is different from that in the first embodiment in that both of header tanks 163 and 164 do not have separators 163c and 164c (see FIG. 3).

Specifically, as shown in FIG. 7, the first heat radiating heat exchanger 16 has refrigerant tubes 160, an inlet-side header tank 163, an outlet-side header tank 164, and corrugated fins 165.

The refrigerant tubes 160 in the present embodiment are tubes similar to the refrigerant tubes 161 and 162 in the first embodiment. The refrigerant tubes 160 are stacked in a tube stacking direction at intervals to define a void between each adjacent two tubes of the refrigerant tubes 160. The refrigerant, flowing through the refrigerant tubes 160, exchanges heat with the outside air flowing in the void.

Since the inlet-side header tank 163 does not have the separator 163c (see FIG. 3), the inlet-side header tank 163 has a single internal space. The outlet-side header tank 164 has a single internal space similarly to the inlet-side header tank 163. The inlet-side header tank 163 is connected to respective one ends of the refrigerant tubes 160 and the outlet-side header tank 164 is connected to the other ends of the refrigerant tubes 160.

A first refrigerant inlet 163f and a second refrigerant inlet 163g are formed at the inlet-side header tank portion 163. The first refrigerant inlet 163f and the second refrigerant inlet 163g are arranged in parallel to each other in the flow direction of the refrigerant flowing in the first heat radiating heat exchanger 16 similarly to the refrigerant inlets 163d and 163e in the first embodiment. In other words, the refrigerant compressed by a compressor 14 (see FIG. 2) flows in parallel into the first refrigerant inlet 163f and the second refrigerant inlet 163g as shown by arrows FL1in and FL2in in FIG. 7. Then, the inlet-side header tank 163 distributes the refrigerant, flowing into the inlet-side header tank 163, to the refrigerant tubes 160.

A refrigerant outlet 164f guiding the refrigerant to flow out of the outlet-side header tank 164 is provided in the outlet-side header tank 164. The outlet-side header tank 164 collects the refrigerant flowing into the outlet-side header tank 164 from the first refrigerant tubes 160. The outlet-side header tank 164 subsequently guides the refrigerant to flow out of the refrigerant outlet 164f as shown by an arrow FLout in FIG. 7 toward the subcooling portion 182 of the second heat radiating heat exchanger 18 via a condensing portion 181 (see FIG. 2) of the second heat radiating heat exchanger 18 and a receiver 20.

As shown in FIG. 7, the first refrigerant inlet 163f is provided at one end portion 163h of the inlet-side header tank 163 in the tube stacking direction and the second refrigerant inlet 163g is provided at the other end portion 163i of the inlet-side header tank 163 in the tube stacking direction. In short, the second refrigerant inlet 163g is provided at a position displaced from the first refrigerant inlet 163f in the tube stacking direction. The refrigerant outlet 164f is located between the first refrigerant inlet 163f and the second refrigerant inlet 163g in the tube stacking direction. Specifically, the refrigerant outlet 164f is located at a central portion between the first refrigerant inlet 163f and the second refrigerant inlet 163g.

In the present embodiment, similarly to the above-described first embodiment, it is possible to obtain effects exerted by the same structures as those in the first embodiment.

According to the first heat radiating heat exchanger 16 in the present embodiment, the first refrigerant inlet 163f is provided at the one end portion 163h of the inlet-side header tank 163 in the tube stacking direction and the second refrigerant inlet 163g is provided at the other end portion 163i of the inlet-side header tank 163 in the tube stacking direction. Therefore, as compared with a structure having only one refrigerant inlet, for example, there is an advantage that it is easy to bring distribution of the refrigerant close to even distribution by suppressing uneven distribution of the refrigerant in the first heat radiating heat exchanger 16 while increasing the first heat radiating heat exchanger 16 in size. In other words, it is possible to improve distributivity of the refrigerant in the first heat radiating heat exchanger 16, i.e., distributivity into the refrigerant tubes 160.

Since the refrigerant outlet 164f is located between the first refrigerant inlet 163f and the second refrigerant inlet 163g in the tube stacking direction, it is possible to further improve distributivity of the refrigerant into the refrigerant tubes 160.

Although the present embodiment is a variation of the first embodiment, it is possible to combine the present embodiment with the above-described third embodiment.

### (Other Modifications)

While the present disclosure has been described with reference to preferred embodiments thereof, it is to be understood that the disclosure is not limited to the preferred embodiments and constructions. The present disclosure is intended to cover various modification and equivalent arrangements within a scope of the claims. It should be understood that structures described in the above-described embodiments are preferred structures, and the present disclosure is not limited to have the preferred structures.
(1) In each of the above-described embodiments, the vehicle air-conditioning apparatus 100 is attached to the bus vehicle or the like, for example. However, the vehicle to which the vehicle air-conditioning apparatus 100 is mounted is not limited to the bus vehicle or the like.
(2) In the above-described first embodiment, as shown in FIG. 3, not only the internal space of the inlet-side header tank 163 but also the internal space of the outlet-side header tank 164 is divided into two as shown in FIG. 3. However, an outlet-side header tank 164 shown in FIG. 3 may have an internal space which is not divided similarly to the outlet-side header tank 164 shown in FIG. 7.
(3) In each of the above-described embodiments, the vehicle air-conditioning apparatus 100 has the two evaporators 28 and 30. However, a quantity of evaporators 28 and 30 is not limited and the vehicle air-conditioning apparatus 100 may have one, three, or more evaporators.
(4) In each of the above-described embodiments, the first evaporator unit of the vehicle air-conditioning apparatus 100 has the first evaporator 28 and the second evaporator unit has the second evaporator 30. However, each of the first evaporator unit and the second evaporator does not necessarily have one evaporator. For example, one or both of a first evaporator unit and a second evaporator unit may have small evaporators.
(5) In each of the above-described embodiments, the condenser unit 19 has the first heat radiating heat exchanger 16 and the second heat radiating heat exchanger 18. However, the condenser unit 19 may have one, three, or more heat radiating heat exchangers.

The present disclosure is not limited to the above-described embodiments and can be modified within the scope of the claims. The above-described embodiments are not unrelated to each other and can be combined with each other except for a case where the combination is clearly improper. In the above-described embodiments, it is to be understood that elements constituting the embodiments are not necessary except for a case of being explicitly specified to be necessary and a case of being considered to be absolutely necessary in principle according to the scope of the claims.

Even when a factor such as a quantity of elements, a value, an amount, a range is mentioned in the above-described embodiments, it is to be understood that the factor is not limited to a specific value except for a case of being explicitly specified to be necessary and a case of being considered to be absolutely necessary in principle according to the scope of the claims. Even when a feature such as a material forming a member, a shape of a member, a positional relation of members, it is to be understood that such feature is not limited to a specific material, shape, positional relation, or the like except for a case of being explicitly specified to be necessary and a case of being considered to be absolutely necessary in principle according to the scope of the claims.

## Claims

1. A vehicle air-conditioning apparatus comprising:
a condenser unit (19) that is attachable to a roof (9) of a vehicle (8);
a first evaporator unit (28) that is attachable to the roof (9); and
a second evaporator unit (30) that is attachable to the roof (9) and arranged adjacent to the first evaporator unit (28) in a width direction (DR3) of the vehicle (8), wherein
the condenser unit (19) has
a condensing portion (166, 167, 168, 181) that condenses a refrigerant, compressed by a compressor (14), by exchanging heat between the refrigerant and outside air, wherein
the condenser unit (19) is located between the first evaporator unit (28) and the second evaporator unit (30) in the width direction (DR3), **characterized in that** the condenser unit (19) comprises
at least one subcooling portion (169, 182) that cools a liquid-phase refrigerant, condensed by the condensing portion (166, 167, 168, 181), by exchanging heat between the liquid-phase refrigerant and the outside air,
each of the first evaporator unit (28) and the second evaporator unit (30) evaporates a decompressed refrigerant, flowing out of the at least one subcooling portion (169, 182) and being decompressed, by exchanging heat between the decompressed refrigerant and air to be blown into a vehicle compartment,
one subcooling portion (182) of the at least one subcooling portion (169, 182) is located at a position displaced forward in a traveling direction of the vehicle (8) in the condenser unit (19);
the condenser unit (19) has a first heat radiating heat exchanger (16) and a second heat radiating heat exchanger (18),
the first heat radiating heat exchanger (16) condenses the refrigerant, compressed by the compressor (14), by exchanging heat between the refrigerant and the outside air,
the second heat radiating heat exchanger (18) has the condensing portion (181) and the one subcooling portion (182),
each of the first evaporator unit (28) and the second evaporator unit (30) evaporates the decompressed refrigerant, flowing out of the one subcooling portion (182) and being decompressed, by exchanging heat between the decompressed refrigerant and the air to be blown into the vehicle compartment,
the second heat radiating heat exchanger (18) is located on a front side of the first heat radiating heat exchanger (16) in a traveling direction of the vehicle (8);
wherein the first heat radiating heat exchanger (16) is connected to the condensing portion (181) in series, and is located upstream of the condensing portion (181) in a flow direction of the refrigerant flowing from the compressor (14) to one of the first evaporator unit (28) and the second evaporator unit (30), and
an entirety of the refrigerant flowing out of the first heat radiating heat exchanger (16) flows into the condensing portion (181).

2. The vehicle air-conditioning apparatus according to claim 1, wherein
the first heat radiating heat exchanger (16) and the second heat radiating heat exchanger (18) are provided to increase an air volume of the outside air passing through the second heat radiating heat exchanger (18) to be larger than an air volume of the outside air passing through the first heat radiating heat exchanger (16).

3. The vehicle air-conditioning apparatus according to claim 1 or 2, wherein
the first heat radiating heat exchanger (16) has
a plurality of refrigerant tubes (160) that are stacked in one direction to define a void between each adjacent tubes of the plurality of refrigerant tubes (160), the refrigerant that flows in the plurality of refrigerant tubes (160) while exchanging heat with the outside air flowing in the void,
an inlet-side header tank (163) that is connected to one ends of the plurality of refrigerant tubes (160), and
an outlet-side header tank (164) that is connected to other ends of the plurality of refrigerant tubes (160),
the inlet-side header tank (163) is provided with a first refrigerant inlet (163f) and a second refrigerant inlet (163g), the first refrigerant inlet (163f) and the second refrigerant inlet (163g) that are arranged in parallel to each other in a flow direction of the refrigerant flowing in the first heat radiating heat exchanger (16), the refrigerant, compressed by the compressor (14), flowing into the first refrigerant inlet (163f) and the second refrigerant inlet (163g),
the outlet-side header tank (164) collects the refrigerant flowing from the plurality of refrigerant tubes (160) and guides the refrigerant to flow toward the one subcooling portion (182), and
the second refrigerant inlet (163g) is located not to overlap with the first refrigerant inlet (163f) in the one direction.

4. The vehicle air-conditioning apparatus according to any one of claims 1 to 3, wherein
the first heat radiating heat exchanger (16) has
a plurality of refrigerant tubes (160) that are stacked in one direction to define a void between each adjacent tubes of the plurality of refrigerant tubes (160), the refrigerant that flows in the plurality of refrigerant tubes (160) while exchanging heat with the outside air flowing in the void,
an inlet-side header tank (163) that is connected to one ends of the plurality of refrigerant tubes (160), and
an outlet-side header tank (164) that is connected to the other ends of the plurality of refrigerant tubes (160),
the inlet-side header tank (163) is provided with a first refrigerant inlet (163f) and a second refrigerant inlet (163g), the first refrigerant inlet (163f) and the second refrigerant inlet (163g) that are arranged in parallel to each other in a flow direction of the refrigerant flowing in the first heat radiating heat exchanger (16), the refrigerant, compressed by the compressor (14), flowing into the first refrigerant inlet (163f) and the second refrigerant inlet (163g),
the outlet-side header tank (164) collects the refrigerant flowing from the plurality of refrigerant tubes (160) and guides the refrigerant to flow toward the one subcooling portion (182), and
the first refrigerant inlet (163f) is provided in one end portion (163h) of the inlet-side header tank (163) in the one direction, and
the second refrigerant inlet (163g) is provided in an other end portion (163i) of the inlet-side header tank (163) in the one direction.

5. The vehicle air-conditioning apparatus according to claim 3 or 4, wherein
the outlet-side header tank (164) is provided with a refrigerant outlet (164f) that guides the refrigerant to flow out of the outlet-side header tank (164), and
the refrigerant outlet is located between the first refrigerant inlet (163f) and the second refrigerant inlet (163g) in the one direction.

6. The vehicle air-conditioning apparatus according to any one of claims 1 to 2, wherein
the first heat radiating heat exchanger (16) has a first condensing portion (166) and a second condensing portion (167) arranged in parallel to each other in a flow direction of the refrigerant flowing in the first heat radiating heat exchanger (16), and
each of the first condensing portion (166) and the second condensing portion (167) condenses the refrigerant compressed by the compressor (14).

7. The vehicle air-conditioning apparatus according to claim 6, wherein
the first heat radiating heat exchanger (16) is arranged such that the first condensing portion (166) and the second condensing portion (167) are arranged adjacent to each other in the width direction (DR3).

8. The vehicle air-conditioning apparatus according to any one of claims 1 to 2, wherein
the first heat radiating heat exchanger (16) has
a plurality of first refrigerant tubes (161) that are stacked in one direction to define a void between each adjacent tubes of the plurality of first refrigerant tubes (161), the refrigerant that flows in the plurality of first refrigerant tubes (161) while exchanging heat with the outside air flowing in the void,
a plurality of second refrigerant tubes (162) that are stacked in the one direction to define a void between each adjacent tubes of the plurality of second refrigerant tubes (162), the refrigerant that flows in the plurality of second refrigerant tubes (162) while exchanging heat with the outside air flowing in the void,,
an inlet-side header tank (163) including a first inlet-side tank portion (163a) that is connected to one ends of the plurality of first refrigerant tubes (161) and a second inlet-side header tank portion (163b) that is connected to one ends of the plurality of second refrigerant tubes (162), and
an outlet-side header tank (164) that is connected to other ends of the plurality of first refrigerant tubes (161) and other ends of the plurality of second refrigerant tubes (162),
the first inlet-side tank portion and the second inlet-side tank portion are arranged in parallel to each other in a flow direction of the refrigerant flowing in the first heat radiating heat exchanger (16),
the refrigerant compressed by the compressor (14) flows into the first inlet-side tank portion and the second inlet-side tank portion, and
the outlet-side header tank (164) collects the refrigerant flowing from the plurality of first refrigerant tubes (161) and the plurality of second refrigerant tubes (162) and guides the refrigerant to flow toward the one subcooling portion (182).

9. The vehicle air-conditioning apparatus according to claim 8, wherein
the first heat radiating heat exchanger (16) is arranged such that the plurality of first refrigerant tubes (161) are located adjacent to the plurality of second refrigerant tubes (162) in the width direction (DR3).

10. The vehicle air-conditioning apparatus according to any one of claims 1 to 9, wherein
the second heat radiating heat exchanger (18) is arranged such that the condensing portion (181) is located adjacent to the one subcooling portion (182) in the width direction (DR3).

11. The vehicle air-conditioning apparatus according to any one of claims 1 to 9, wherein
the second heat radiating heat exchanger (18) is arranged such that the one subcooling portion (182) is located on a front side of the condensing portion (181) in the traveling direction.

## Patentansprüche

1. Fahrzeugklimatisierungsvorrichtung, mit:
einer Kondensatoreinheit (19), die an einem Dach (9) eines Fahrzeugs (8) befestigbar ist;
einer ersten Verdampfereinheit (28), die an dem Dach (9) befestigbar ist; und
einer zweiten Verdampfereinheit (30), die an dem Dach (9) befestigbar ist und in einer Breitenrichtung (DR3) des Fahrzeugs (8) benachbart zu der ersten Verdampfereinheit (28) angeordnet ist, wobei
die Kondensatoreinheit (19)
einen Kondensationsabschnitt (166, 167, 168, 181) hat, der ein Kältemittel kondensiert, das durch einen Verdichter (14) verdichtet wird, indem Wärme zwischen dem Kältemittel und Außenluft ausgetauscht wird, wobei
die Kondensatoreinheit (19) in der Breitenrichtung (DR3) zwischen der ersten Verdampfereinheit (28) und der zweiten Verdampfereinheit (30) lokalisiert ist,
**dadurch gekennzeichnet, dass** die Kondensatoreinheit (19)
mindestens einen Unterkühlungsabschnitt (169, 182) aufweist, der ein flüssigphasiges Kältemittel kühlt, das durch den Kondensationsabschnitt (166, 167, 168, 181) kondensiert wird, indem Wärme zwischen dem flüssigphasigen Kältemittel und der Außenluft ausgetauscht wird,
eine jede von der ersten Verdampfereinheit (28) und der zweiten Verdampfereinheit (30) ein entspanntes Kältemittel verdampft, das aus dem mindestens einen Unterkühlungsabschnitt (169, 182) ausströmt und entspannt wird, indem Wärme zwischen dem entspannten Kältemittel und in ein Fahrzeugabteil zu blasender Luft ausgetauscht wird,
ein Unterkühlungsabschnitt (182) des mindestens einen Unterkühlungsabschnitts (169, 182) an einer Position lokalisiert ist, die in der Kondensatoreinheit (19) in einer Fahrtrichtung des Fahrzeugs (8) vorwärts verlagert ist;
die Kondensatoreinheit (19) einen ersten Wärmeableitungswärmetauscher (16) und einen zweiten Wärmeableitungswärmetauscher (18) hat,
der erste Wärmeableitungswärmetauscher (16) das Kältemittel kondensiert, das durch den Verdichter (14) verdichtet wird, indem Wärme zwischen dem Kältemittel und der Außenluft ausgetauscht wird,
der zweite Wärmeableitungswärmetauscher (18) den Kondensationsabschnitt (181) und den einen Unterkühlungsabschnitt (182) hat,
eine jede von der ersten Verdampfereinheit (28) und der zweiten Verdampfereinheit (30) das entspannte Kältemittel verdampft, das aus dem einen Unterkühlungsabschnitt (182) ausströmt und entspannt wird, indem Wärme zwischen dem entspannten Kältemittel und der in das Fahrzeugabteil zu blasenden Luft ausgetauscht wird,
der zweite Wärmeableitungswärmetauscher (18) in einer Fahrtrichtung des Fahrzeugs (8) auf einer Vorderseite des ersten Wärmeableitungswärmetauschers (16) lokalisiert ist;
wobei der erste Wärmeableitungswärmetauscher (16) seriell mit dem Kondensationsabschnitt (181) verbunden ist und in einer Strömungsrichtung des Kältemittels, das aus dem Verdichter (14) zu einer von der ersten Verdampfereinheit (28) und der zweiten Verdampfereinheit (30) strömt, stromaufwärtig des Kondensationsabschnitts (181) lokalisiert ist und
eine Gesamtheit des Kältemittels, das aus dem ersten Wärmeableitungswärmetauscher (16) ausströmt, in den Kondensationsabschnitt (181) strömt.

2. Fahrzeugklimatisierungsvorrichtung nach Anspruch 1, wobei
der erste Wärmeableitungswärmetauscher (16) und der zweite Wärmeableitungswärmetauscher (18) vorgesehen sind, um ein Luftvolumen der Außenluft, die durch den zweiten Wärmeableitungswärmetauscher (18) geht, zu erhöhen, um größer zu sein als ein Luftvolumen der Außenluft, die durch den ersten Wärmeableitungswärmetauscher (16) geht.

3. Fahrzeugklimatisierungsvorrichtung nach Anspruch 1 oder 2, wobei
der erste Wärmeableitungswärmetauscher (16)
eine Vielzahl von Kältemittelrohren (160), die in einer Richtung gestapelt sind, um einen Hohlraum zwischen jeweils benachbarten Rohren der Vielzahl von Kältemittelrohren (160) zu definieren, wobei das Kältemittel während eines Austauschs von Wärme mit der Außenluft, die in dem Hohlraum strömt, in der Vielzahl von Kältemittelrohren (160) strömt,
einen einlassseitigen Verteiler-/Sammlertank (163), der mit einen Enden der Vielzahl von Kältemittelrohren (160) verbunden ist, und
einen auslassseitigen Verteiler-/Sammlertank (164) hat, der mit anderen Enden der Vielzahl von Kältemittelrohren (160) verbunden ist,
wobei der einlassseitige Verteiler-/Sammlertank (163) mit einem ersten Kältemitteleinlass (163f) und einem zweiten Kältemitteleinlass (163g) versehen ist, der erste Kältemitteleinlass (163f) und der zweite Kältemitteleinlass (163g) in einer Strömungsrichtung des Kältemittels, das in dem ersten Wärmeableitungswärmetauscher (16) strömt, parallel zueinander angeordnet sind, das Kältemittel, das durch den Verdichter (14) verdichtet wird, in den ersten Kältemitteleinlass (163f) und den zweiten Kältemitteleinlass (163g) strömt,
der auslassseitige Verteiler-/Sammlertank (164) das Kältemittel sammelt, das aus der Vielzahl von Kältemittelrohren (160) strömt, und das Kältemittel leitet, um zu dem einen Unterkühlungsabschnitt (182) zu strömen, und
der zweite Kältemitteleinlass (163g) lokalisiert ist, um mit dem ersten Kältemitteleinlass (163f) in der einen Richtung nicht zu überlappen.

4. Fahrzeugklimatisierungsvorrichtung nach einem der Ansprüche 1 bis 3, wobei
der erste Wärmeableitungswärmetauscher (16)
eine Vielzahl von Kältemittelrohren (160), die in einer Richtung gestapelt sind, um einen Hohlraum zwischen jeweils benachbarten Rohren der Vielzahl von Kältemittelrohren (160) zu definieren, wobei das Kältemittel während eines Austauschs von Wärme mit der Außenluft, die in dem Hohlraum strömt, in der Vielzahl von Kältemittelrohren (160) strömt,
einen einlassseitigen Verteiler-/Sammlertank (163), der mit einen Enden der Vielzahl von Kältemittelrohren (160) verbunden ist, und
einen auslassseitigen Verteiler-/Sammlertank (164) hat, der mit den anderen Enden der Vielzahl von Kältemittelrohren (160) verbunden ist,
wobei der einlassseitige Verteiler-/Sammlertank (163) mit einem ersten Kältemitteleinlass (163f) und einem zweiten Kältemitteleinlass (163g) versehen ist, der erste Kältemitteleinlass (163f) und der zweite Kältemitteleinlass (163g) in einer Strömungsrichtung des Kältemittels, das in dem ersten Wärmeableitungswärmetauscher (16) strömt, parallel zueinander angeordnet sind, das Kältemittel, das durch den Verdichter (14) verdichtet wird, in den ersten Kältemitteleinlass (163f) und den zweiten Kältemitteleinlass (163g) strömt,
der auslassseitige Verteiler-/Sammlertank (164) das Kältemittel sammelt, das aus der Vielzahl von Kältemittelrohren (160) strömt, und das Kältemittel leitet, um zu dem einen Unterkühlungsabschnitt (182) zu strömen, und
der erste Kältemitteleinlass (163f) in der einen Richtung in einem Endabschnitt (163h) des einlassseitigen Verteiler-/Sammlertanks (163) vorgesehen ist und
der zweite Kältemitteleinlass (163g) in der einen Richtung in einem anderen Endabschnitt (163i) des einlassseitigen Verteiler-/Sammlertanks (163) vorgesehen ist.

5. Fahrzeugklimatisierungsvorrichtung nach Anspruch 3 oder 4, wobei
der auslassseitige Verteiler-/Sammlertank (164) mit einem Kältemittelauslass (164f) versehen ist, der das Kältemittel leitet, um aus dem auslassseitigen Verteiler-/Sammlertank (164) auszuströmen, und
der Kältemittelauslass in der einen Richtung zwischen dem ersten Kältemitteleinlass (163f) und dem zweiten Kältemitteleinlass (163g) lokalisiert ist.

6. Fahrzeugklimatisierungsvorrichtung nach einem der Ansprüche 1 bis 2, wobei
der erste Wärmeableitungswärmetauscher (16) einen ersten Kondensationsabschnitt (166) und einen zweiten Kondensationsabschnitt (167) hat, die in einer Strömungsrichtung des Kältemittels, das in dem ersten Wärmeableitungswärmetauscher (16) strömt, parallel zueinander angeordnet sind, und
ein jeder von dem ersten Kondensationsabschnitt (166) und dem zweiten Kondensationsabschnitt (167) das Kältemittel kondensiert, das durch den Verdichter (14) verdichtet wird.

7. Fahrzeugklimatisierungsvorrichtung nach Anspruch 6, wobei
der erste Wärmeableitungswärmetauscher (16) so angeordnet ist, dass der erste Kondensationsabschnitt (166) und der zweite Kondensationsabschnitt (167) in der Breitenrichtung (DR3) benachbart zueinander angeordnet sind.

8. Fahrzeugklimatisierungsvorrichtung nach einem der Ansprüche 1 bis 2, wobei
der erste Wärmeableitungswärmetauscher (16)
eine Vielzahl von ersten Kältemittelrohren (161), die in einer Richtung gestapelt sind, um einen Hohlraum zwischen jeweils benachbarten Rohren der Vielzahl von ersten Kältemittelrohren (161) zu definieren, wobei das Kältemittel während eines Austauschs von Wärme mit der Außenluft, die in dem Hohlraum strömt, in der Vielzahl von ersten Kältemittelrohren (161) strömt,
eine Vielzahl von zweiten Kältemittelrohren (162), die in der einen Richtung gestapelt sind, um einen Hohlraum zwischen jeweils benachbarten Rohren der Vielzahl von zweiten Kältemittelrohren (162) zu definieren, wobei das Kältemittel während eines Austauschs von Wärme mit der Außenluft, die in dem Hohlraum strömt, in der Vielzahl von zweiten Kältemittelrohren (162) strömt,
einen einlassseitigen Verteiler-/Sammlertank (163), der einen ersten einlassseitigen Tankabschnitt (163a), der mit einen Enden der Vielzahl von ersten Kältemittelrohren (161) verbunden ist, und einen zweiten einlassseitigen Verteiler-/Sammlertankabschnitt (163b) aufweist, der mit einen Enden der Vielzahl von zweiten Kältemittelrohren (162) verbunden ist, und
einen auslassseitigen Verteiler-/Sammlertank (164) hat, der mit anderen Enden der Vielzahl von ersten Kältemittelrohren (161) und anderen Enden der Vielzahl von zweiten Kältemittelrohren (162) verbunden ist,
wobei der erste einlassseitige Tankabschnitt und der zweite einlassseitige Tankabschnitt in einer Strömungsrichtung des Kältemittels, das in dem ersten Wärmeableitungswärmetauscher (16) strömt, parallel zueinander angeordnet sind,
das Kältemittel, das durch den Verdichter (14) verdichtet wird, in den ersten einlassseitigen Tankabschnitt und den zweiten einlassseitigen Tankabschnitt strömt und
der auslassseitige Verteiler-/Sammlertank (164) das Kältemittel sammelt, das aus der Vielzahl von ersten Kältemittelrohren (161) und der Vielzahl von zweiten Kältemittelrohren (162) strömt, und das Kältemittel leitet, um zu dem einen Unterkühlungsabschnitt (182) zu strömen.

9. Fahrzeugklimatisierungsvorrichtung nach Anspruch 8, wobei
der erste Wärmeableitungswärmetauscher (16) so angeordnet ist, dass die Vielzahl von ersten Kältemittelrohren (161) in der Breitenrichtung (DR3) benachbart zu der Vielzahl von zweiten Kältemittelrohren (162) lokalisiert ist.

10. Fahrzeugklimatisierungsvorrichtung nach einem der Ansprüche 1 bis 9, wobei
der zweite Wärmeableitungswärmetauscher (18) so angeordnet ist, dass der Kondensationsabschnitt (181) in der Breitenrichtung (DR3) benachbart zu dem einen Unterkühlungsabschnitt (182) lokalisiert ist.

11. Fahrzeugklimatisierungsvorrichtung nach einem der Ansprüche 1 bis 9, wobei
der zweite Wärmeableitungswärmetauscher (18) so angeordnet ist, dass der eine Unterkühlungsabschnitt (182) in der Fahrtrichtung auf einer Vorderseite des Kondensationsabschnitts (181) lokalisiert ist.

## Revendications

1. Appareil de climatisation de véhicule comprenant :
une unité de condenseur (19) qui peut être fixée sur un toit (9) d'un véhicule (8) ;
une première unité d'évaporateur (28) qui peut être fixée sur le toit (9) ; et
une seconde unité d'évaporateur (30) qui peut être fixée sur le toit (9) et agencée de manière adjacente à la première unité d'évaporateur (28) dans une direction de largeur (DR3) du véhicule (8), dans lequel :
l'unité de condenseur (19) a :
une partie de condensation (166, 167, 168, 181) qui condense un réfrigérant, comprimé par un compresseur (14), en échangeant la chaleur entre le réfrigérant et l'air extérieur, dans lequel :
l'unité de condenseur (19) est positionnée entre la première unité d'évaporateur (28) et la seconde unité d'évaporateur (30) dans la direction de largeur (DR3),
**caractérisé en ce que** l'unité de condenseur (19) comprend :
au moins une partie de sous-refroidissement (169, 182) qui refroidit un réfrigérant en phase liquide, condensé par la partie de condensation (166, 167, 168, 181), en échangeant la chaleur entre le réfrigérant en phase liquide et l'air extérieur,
chacune parmi la première unité d'évaporateur (28) et la seconde unité d'évaporateur (30) évapore un réfrigérant décompressé, s'écoulant hors de la au moins une partie de sous-refroidissement (169, 182) et étant décompressé, en échangeant la chaleur entre le réfrigérant décompressé et l'air destiné à être soufflé dans un compartiment de véhicule,
une partie de sous-refroidissement (182) de la au moins une partie de sous-refroidissement (169, 182) est positionnée dans une position déplacée vers l'avant dans une direction de déplacement du véhicule (8) dans l'unité de condenseur (19) ;
l'unité de condenseur (19) a un premier échangeur de chaleur à rayonnement de chaleur (16) et un second échangeur de chaleur à rayonnement de chaleur (18),
le premier échangeur de chaleur à rayonnement de chaleur (16) condense le réfrigérant, compressé par le compresseur (14), en échangeant la chaleur entre le réfrigérant et l'air extérieur,
le second échangeur de chaleur à rayonnement de chaleur (18) a la partie de condensation (181) et la une partie de sous-refroidissement (182),
chacune parmi la première unité d'évaporateur (28) et la seconde unité d'évaporateur (30) évapore le réfrigérant décompressé, s'écoulant hors de la une partie de sous-refroidissement (182) et étant décompressé, en échangeant la chaleur entre le réfrigérant décompressé et l'air destiné à être soufflé dans le compartiment de véhicule,
le second échangeur de chaleur à rayonnement de chaleur (18) est positionné sur un côté avant du premier échangeur de chaleur à rayonnement de chaleur (16) dans une direction de déplacement du véhicule (8) ;
dans lequel le premier échangeur de chaleur à rayonnement de chaleur (16) est raccordé à la partie de condensation (181) en série, et est positionné en amont de la partie de condensation (181) dans une direction d'écoulement du réfrigérant s'écoulant du compresseur (14) à l'une parmi la première unité d'évaporateur (28) et la seconde unité d'évaporateur (30), et
une intégralité du réfrigérant s'écoulant hors du premier échangeur de chaleur à rayonnement de chaleur (16) s'écoule dans la partie de condensation (181).

2. Appareil de climatisation de véhicule selon la revendication 1, dans lequel :
le premier échangeur de chaleur à rayonnement de chaleur (16) et le second échangeur de chaleur à rayonnement de chaleur (18) sont prévus pour augmenter un volume d'air de l'air extérieur passant par le second échangeur de chaleur à rayonnement de chaleur (18) afin qu'il soit supérieur à un volume d'air de l'air extérieur passant par le premier échangeur de chaleur à rayonnement de chaleur (16).

3. Appareil de climatisation de véhicule selon la revendication 1 ou 2, dans lequel :
le premier échangeur de chaleur à rayonnement de chaleur (16) a :
une pluralité de tubes de réfrigérant (160) qui sont empilés dans une direction afin de définir un vide entre chaque tube adjacent de la pluralité de tubes de réfrigérant (160), le réfrigérant qui s'écoule dans la pluralité de tubes de réfrigérant (160) tout en échangeant la chaleur avec l'air extérieur s'écoulant dans le vide,
un collecteur de tête du côté de l'entrée (163) qui est raccordé aux premières extrémités de la pluralité de tubes de réfrigérant (160), et
un collecteur de tête du côté de la sortie (164) qui est raccordé aux autres extrémités de la pluralité de tubes de réfrigérant (160),
le collecteur de tête du côté de l'entrée (163) est prévu avec une première entrée de réfrigérant (163f) et une seconde entrée de réfrigérant (163g), la première entrée de réfrigérant (163f) et la seconde entrée de réfrigérant (163g) qui sont agencées parallèlement entre elles dans une direction d'écoulement du réfrigérant s'écoulant dans le premier échangeur de chaleur à rayonnement de chaleur (16), le réfrigérant compressé par le compresseur (14) s'écoulant dans la première entrée de réfrigérant (163f) et la seconde entrée de réfrigérant (163g),
le collecteur de tête du côté de la sortie (164) collecte le réfrigérant sortant de la pluralité de tubes de réfrigérant (160) et guide le réfrigérant pour qu'il s'écoule vers la une partie de sous-refroidissement (182), et
la seconde entrée de réfrigérant (163g) est positionnée pour ne pas recouvrir la première entrée de réfrigérant (163f) dans la une direction.

4. Appareil de climatisation de véhicule selon l'une quelconque des revendications 1 à 3, dans lequel :
le premier échangeur de chaleur à rayonnement de chaleur (16) a :
une pluralité de tubes de réfrigérant (160) qui sont empilés dans une direction afin de définir un vide entre chaque tube adjacent de la pluralité de tubes de réfrigérant (160), le réfrigérant qui s'écoule dans la pluralité de tubes de réfrigérant (160) tout en échangeant la chaleur avec l'air extérieur s'écoulant dans le vide,
un collecteur de tête du côté de l'entrée (163) qui est raccordé aux premières extrémités de la pluralité de tubes de réfrigérant (160), et
un collecteur de tête du côté de la sortie (164) qui est raccordé aux autres extrémités de la pluralité de tubes de réfrigérant (160),
le collecteur de tête du côté de l'entrée (163) est prévu avec une première entrée de réfrigérant (163f) et une seconde entrée de réfrigérant (163g), la première entrée de réfrigérant (163f) et la seconde entrée de réfrigérant (163g) qui sont agencées parallèlement entre elles dans une direction d'écoulement du réfrigérant s'écoulant dans le premier échangeur de chaleur à rayonnement de chaleur (16), le réfrigérant, compressé par le compresseur (14), s'écoulant dans la première entrée de réfrigérant (163f) et la seconde entrée de réfrigérant (163g),
le collecteur de tête du côté de la sortie (164) collecte le réfrigérant s'écoulant à partir de la pluralité de tubes de réfrigérant (160) et guide le réfrigérant pour qu'il s'écoule vers la une partie de sous-refroidissement (182), et
la première entrée de réfrigérant (163f) est prévue dans une partie d'extrémité (163h) du collecteur de tête du côté de l'entrée (163) dans la une direction, et
la seconde entrée de réfrigérant (163g) est prévue dans une autre partie d'extrémité (163i) du collecteur de tête du côté de l'entrée (163) dans la une direction.

5. Appareil de climatisation de véhicule selon la revendication 3 ou 4, dans lequel :
le collecteur de tête du côté de la sortie (164) est prévu avec une sortie de réfrigérant (164f) qui guide le réfrigérant pour qu'il s'écoule hors du collecteur de tête du côté de la sortie (164), et
la sortie de réfrigérant est positionnée entre la première entrée de réfrigérant (163f) et la seconde entrée de réfrigérant (163g) dans la une direction.

6. Appareil de climatisation de véhicule selon l'une quelconque des revendications 1 à 2, dans lequel :
le premier échangeur de chaleur à rayonnement de chaleur (16) a une première partie de condensation (166) et une seconde partie de condensation (167) agencées parallèlement entre elles dans une direction d'écoulement du réfrigérant s'écoulant dans le premier échangeur de chaleur à rayonnement de chaleur (16), et
chacune parmi la première partie de condensation (166) et la seconde partie de condensation (167) condense le réfrigérant compressé par le compresseur (14).

7. Appareil de climatisation de véhicule selon la revendication 6, dans lequel :
le premier échangeur de chaleur à rayonnement de chaleur (16) est agencé de sorte que la première partie de condensation (166) et la seconde partie de condensation (167) sont agencées de manière adjacente entre elles dans la direction de largeur (DR3).

8. Appareil de climatisation de véhicule selon l'une quelconque des revendications 1 à 2, dans lequel :
le premier échangeur de chaleur à rayonnement de chaleur (16) a :
une pluralité de tubes de réfrigérant (161) qui sont empilés dans une direction pour définir un vide entre chaque tube adjacent de la pluralité de premiers tubes de réfrigérant (161), le réfrigérant qui s'écoule dans la pluralité de premiers tubes de réfrigérant (161) tout en échangeant la chaleur avec l'air extérieur s'écoulant dans le vide,
une pluralité de seconds tubes de réfrigérant (162) qui sont empilés dans la une direction afin de définir un vide entre chaque tube adjacent de la pluralité de seconds tubes de réfrigérant (162), le réfrigérant qui s'écoule dans la pluralité de seconds tubes de réfrigérant (162) tout en échangeant la chaleur avec l'air extérieur qui s'écoule dans le vide,
un collecteur de tête du côté de l'entrée (163) comprenant une première partie de collecteur du côté de l'entrée (163a) qui est raccordée aux premières extrémités de la pluralité des premiers tubes de réfrigérant (161) et une seconde partie de collecteur de tête du côté de l'entrée (163b) qui est raccordée aux premières extrémités de la pluralité de seconds tubes de réfrigérant (162), et
un collecteur de tête du côté de la sortie (164) qui est raccordé aux autres extrémités de la pluralité de premiers tubes de réfrigérant (161) et aux autres extrémités de la pluralité de seconds tubes de réfrigérant (162),
la première partie de collecteur du côté de l'entrée et la seconde partie de collecteur du côté de l'entrée sont agencées parallèlement entre elles dans une direction d'écoulement du réfrigérant s'écoulant dans le premier échangeur de chaleur à rayonnement de chaleur (16),
le réfrigérant compressé par le compresseur (14) s'écoule dans la première partie de collecteur du côté de l'entrée et la seconde partie de collecteur du côté de l'entrée, et
le collecteur de tête du côté de la sortie (164) collecte le réfrigérant qui s'écoule à partir de la pluralité de premiers tubes de réfrigérant (161) et de la pluralité de seconds tubes de réfrigérant (162) et guide le réfrigérant pour qu'il s'écoule vers la une partie de sous-refroidissement (182).

9. Appareil de climatisation de véhicule selon la revendication 8, dans lequel :
le premier échangeur de chaleur à rayonnement de chaleur (16) est agencé de sorte que la pluralité de premiers tubes de réfrigérant (161) est positionnée de manière adjacente à la pluralité de seconds tubes de réfrigérant (162) dans la direction de largeur (DR3).

10. Appareil de climatisation de véhicule selon l'une quelconque des revendications 1 à 9, dans lequel :
le second échangeur de chaleur à rayonnement de chaleur (18) est agencé de sorte que la partie de condensation (181) est positionnée de manière adjacente à la une partie de sous-refroidissement (182) dans la direction de largeur (DR3).

11. Appareil de climatisation de véhicule selon l'une quelconque des revendications 1 à 9, dans lequel :
le second échangeur de chaleur à rayonnement de chaleur (18) est agencé de sorte que la une partie de sous-refroidissement (182) est positionnée sur un côté avant de la partie de condensation (181) dans la direction de déplacement.
